# EUROPEAN PATENT SPECIFICATION

(11) **EP 1 902 898 B1**
(45) Date of publication and mention of the grant of the patent: **22.12.2010**
(21) Application number: 07116786.0
(22) Date of filing: 19.09.2007
(51) Int. Cl.: B60N 2/44, B60N 2/68, B60N 2/30, B60N 2/36, B60R 21/02

(54) **Seat-bulkhead assembly, in particular for a commercial vehicle, and commercial vehicle provided with such seat-bulkhead assembly**
Sitz-Trennwand-Anordnung, insbesondere für ein Nutzfahrzeug und mit einer solchen Sitz-Trennwand-Anordnung ausgestattetes Nutzfahrzeug
Ensemble siège-cloison, en particulier pour véhicule commercial, et véhicule commercial doté d'un tel ensemble siège-cloison

(30) Priority: 19.09.2006 IT TO20060667
(43) Date of publication of application: 26.03.2008
(73) Proprietor: FIAT AUTO S.p.A., 10135 Torino (IT)
(72) Inventor: Benvenuto, Carlo, 10135 Torino (IT)
(74) Representative: Jorio, Paolo

(56) References cited:
- EP-A1- 1 574 390
- FR-A1- 2 821 805

## Description

The present invention relates to a seat-bulkhead assembly, in particular for a commercial vehicle.

It is known that in commercial vehicles, the passenger compartment accommodates two seats, one for a driver and the other for a passenger, and is separated from a rear loading compartment by means of a bulkhead, which protects the driver and the passenger from possible displacements in longitudinal direction of the loads which are carried in such rear compartment, e.g. in the case of accident.

From European Patent Application EP-A-1574390, it is known to fix a right-hand portion of the bulkhead to the passenger seat backrest. Such backrest, along with such right-hand bulkhead portion, may be folded forwards, together, to define a front extension of the rear loading compartment alongside the driver's seat.

It is felt the need to protect the driver from possible transversal displacements of the loads which area arranged over the passenger seat when the backrest of such seat is folded.

It is the object of the present invention to make a seat-bulkhead assembly, in particular for a commercial vehicle, which allows to simply and cost-effectively solve the aforementioned problems.

According to the present invention, there is made a seat-bulkhead assembly, in particular for a commercial vehicle, comprising:
- a seat comprising a movable backrest between an essentially vertical raised position, in which the backrest defines a rest for a passenger, and an essentially horizontal folded position, in which a rear surface of said backrest is facing upwards;
- a barrier portion carried by said backrest and jointly movable with said backrest between said raised and folded positions;
**characterized in that** said barrier portion is raisable with respect to said backrest when the backrest is in folded position to be taken to a position that is essentially vertical and is essentially parallel to said backrest.

The invention will now be described with reference to the accompanying drawings illustrating a non-limitative embodiment, in which:
- figure 1 is a perspective side view of a preferred embodiment of the seat-bulkhead assembly, in particular for a commercial vehicle, according to the present invention;
- figure 2 is a rear perspective view which shows the seat-bulkhead assembly in figure 1 in a condition in which a backrest of the assembly is folded forwards;
- figure 3 is a top perspective view of the seat-bulkhead assembly in figure 2;
- figure 4 is a further perspective view which shows a bulkhead of the seat-bulkhead assembly in essentially vertical raised position with respect to the backrest in figures 2 and 3.

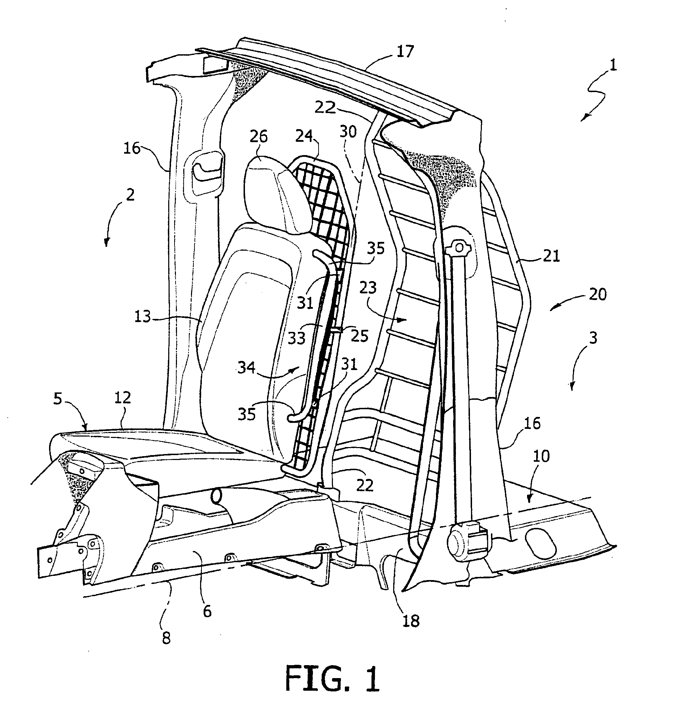

In figure 1, numeral 1 indicates as a whole a commercial vehicle (partially shown), which comprises a front passenger compartment 2 and a rear loading compartment 3. The passenger compartment 2 accommodates a seat for a driver (not shown) and a seat 5 for a passenger. The two seat bases are carried by a lower floor and are reciprocally separated by a structure 6, which is also carried by such floor, which extends along a longitudinal advancement direction 8 of the vehicle 1 and is normally called "tunnel console" or simply "tunnel". The compartment 3 is instead inferiorly defined by a loading plane 10 (partially shown) and is accessible through rear and/or side doors (not shown) of the vehicle 1.

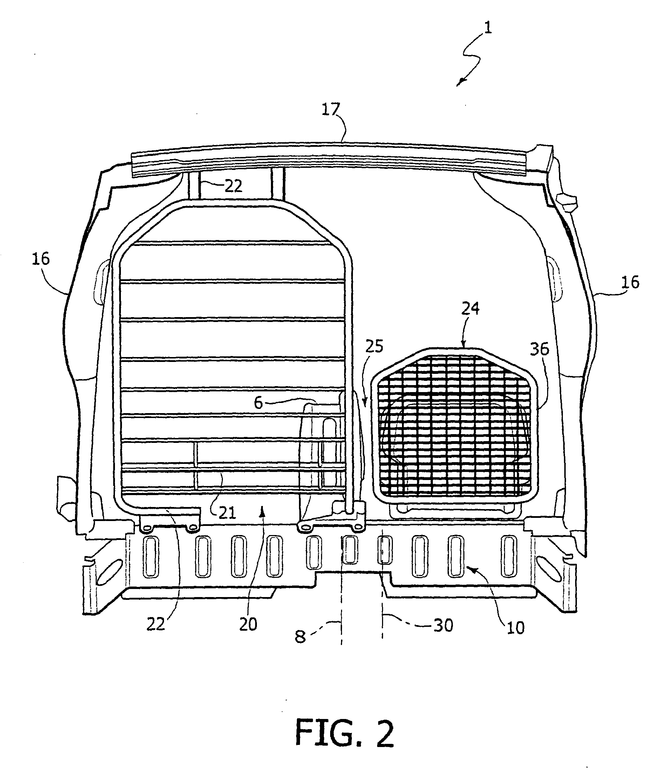

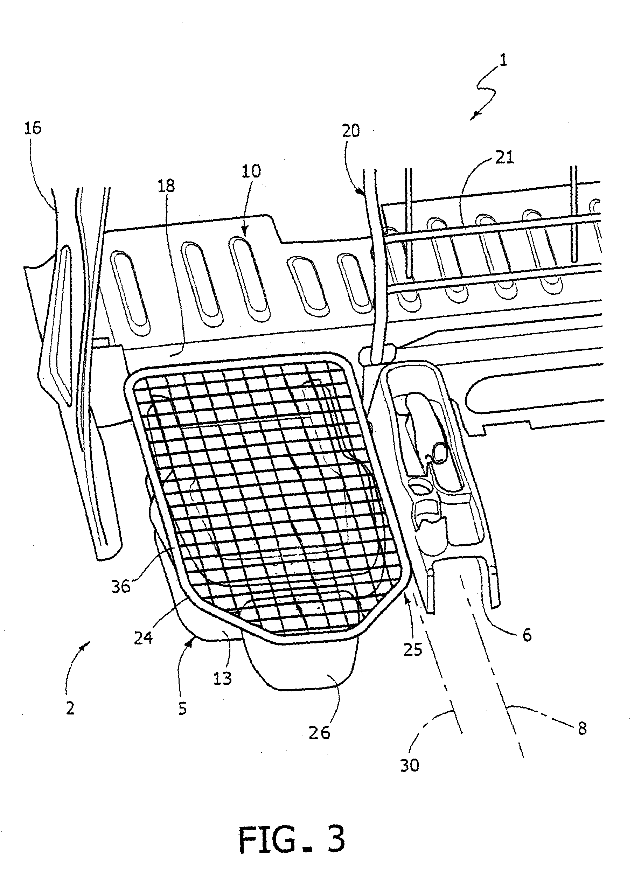

The seat 5 comprises a seat base 12 and a backrest 13, which is forwardly foldable from an essentially vertical raised position (figure 1), in which it defines a rest for the passenger's back, towards an essentially horizontal lowered position (figures 2 and 3), in which it is arranged against the seat base 12. In the lowered or folded position of the backrest 13, a rear surface 15 of the backrest 13 is facing upwards and is essentially coplanar to the plane 10, to forwardly extend the compartment 3 alongside the tunnel 6 and, thus, the driver's driving position.

The vehicle 1 has a structural chassis or body of the intrinsically known type and not described in detail: in particular, such body comprises two uprights 16, arranged along the sides of the vehicle 1 (not shown) and alongside the seat backrests. The ends of the uprights 16 are joined together by an upper crossmember 17 arranged along a roof of the vehicle 1 (not shown) and a lower crossmember 18 which constitutes part of the plane 10 or defines a support for the plane 10.

When the backrest 13 is arranged in its essentially vertical raised position (figure 1), the passenger compartment 2 and the compartment 3 are separated by a barrier or bulkhead 20, which prevents the loads arranged on the plane 10 from reaching the passenger compartment 2 and the positions defined by the seats in the case of sudden decelerations, e.g. in the case of accident.

The barrier 20 comprises a fixed portion 21, the ends 22 of which are directly coupled to the crossmembers 17 and 18. The portion 21 is uncoupled from the sides of the vehicle 1, is arranged behind the driver's seat and the tunnel 6, and extends backwards from its ends 22, i.e. partially behind the uprights 16, so as to define a frontal housing 23 which allows to longitudinally retract the backrest of the driver's seat during the adjustments which are performed by the driver him or herself to adapt the driver's position to his or her own physical features.

The barrier 20 comprises a portion 24, which is uncoupled from the portion 21, is coupled to the backrest 13 by means of a connection device 25, and is jointly movable with the backrest 13 during the displacements between its essentially vertical raised position and its essentially horizontal lowered position. When the backrest 13 is in raised position, the portion 24 is alongside portion 21, is facing the surface 15 and a head restraint 26 carried by the backrest 13, and is vertically spaced from the roof.

Preferably, the portion 24 is releasably withheld in the above described position by retaining devices (not shown), which cooperate with the backrest 13 and/or with the adjacent side of the vehicle 1 and/or with the roof of the vehicle 1 and/or with the device 25.

According to a variant (not shown), the bulkhead 20 comprises a further portion, which occupies the space between the upper end of the portion 24 and the roof, is carried by the roof or by the portion 24 or by the device 32, and may be of the fixed type or of the rotational type, e.g. to be raised against the roof, or of the roll-up type.

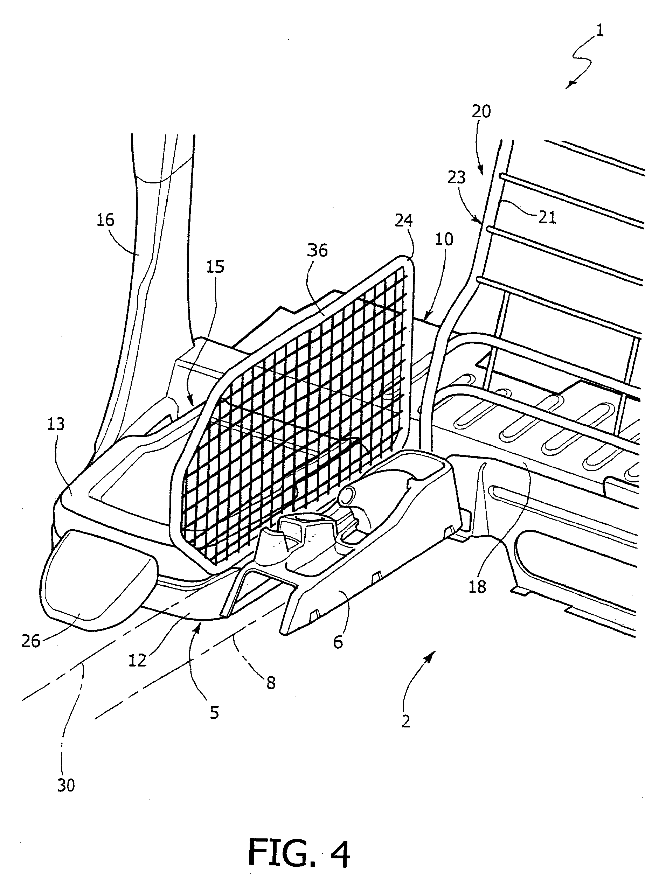

When the backrest 13 is in lowered or folded position, the portion 24 is raisable with respect to the backrest 13 to be taken to an essentially vertical position, essentially parallel to direction 8, alongside the driver's position (figure 4) to free the surface 15 and, at the same time, to protect the driver from the possible displacement of loads which are arranged on the surface 15.

In particular, the portion 24 is rotatable by 90° about a hinge axis 30 which is adjacent and essentially parallel to the backrest 13. The axis 30 is defined by two hinges 31, which constitute part of the device 25.

As shown in figure 1, the device 25 comprises a supporting rod 33, which is parallel to the axis 30, directly carries the hinges 31 in reciprocally spaced positions along the axis 30, and is coupled to a side 34 of the backrest 13 by means of two joining portions 35, which are arranged at the ends of the rod 33 and terminate in the side 34.

Preferably, the portion 24 is withheld in its raised protecting position by releasable retaining devices (not shown) which cooperate with the backrest 13 and/or with the tunnel 6 and/or with the roof of the vehicle 1 and/or with the device 25.

With reference to figure 4, the portion 24 has its longitudinal edge 26 which is arranged on the opposite side with respect to the hinges 31 and which, in the raised protecting position, is vertically spaced from the roof. According to a variant (not shown), in the space between the edge 36 and the roof there could be contemplated a further partition or protection element essentially coplanar to the portion 24 to protect the upper part of the driver's position. For example, such element could be defined by: a door rotationally coupled to the edge 36 by 180° about an axis parallel to axis 30; or by a door rotationally coupled to the roof; or by a wall guided by the portion 24 to slide in a direction orthogonal to the axis 30; or by a roll-up net carried by the edge 36 or by the roof.

In use, it is apparent that the portions 21 and 24 rearly and, respectively, laterally protect the driver's position from possible displacements of the loads.

The fact that the portion 24 is carried by the backrest 13 and is independent from the portion 21 allows to facilitate the positioning and the connecting of the portions of the barrier 20 during the assembly of the vehicle 1 and allows to make the operations of closing and opening of the portion 24 to protect the driver's position relatively easy.

In particular, it is possible to assemble an assembly formed by the seat 5 and by the bulkhead portion 24 before mounting onto the vehicle 1, so as to have more room and fixtures available for mounting the portion 24 with respect to the room and to the fixtures available in the passenger compartment 2 and in the compartment 3.

Finally, from the above, it is apparent that changes and variations can be made to the described seat-bulkhead assembly without departing from the scope of protection of the present invention.

In particular, the movement of the backrest 13 to and from the folded position may be obtained by means of an array of different devices, while the hinges 31 could be replaced by lever couplings or other devices having the same function of ensuring the raising of the portion 24.

## Claims

1. A seat-bulkhead assembly, in particular for a commercial vehicle (1), comprising:
- a seat (5) comprising a backrest (13) movable between an essentially vertical raised position, in which the backrest (13) defines a rest for a passenger, and an essentially horizontal folded position, in which a rear surface (15) of said backrest (13) is facing upwards;
- a barrier portion (24) carried by said backrest (13) and jointly movable with said backrest (13) between said raised and folded positions;
**characterized in that** said barrier portion (24) is raisable with respect, to said backrest (13) when the backrest (13) is in said folded position to be taken to a protection position, that is essentially vertical and is essentially parallel to said backrest (13).

2. An assembly according to claim 1, **characterized by** comprising hinging means (31) which couple said barrier portion (24) to said backrest (13) and make said barrier portion (24) rotational about an axis (30) to and from said protection position.

3. An assembly according to claim 1 or 2, **characterized by** comprising a supporting rod (33), to which said barrier portion (24) is coupled; said supporting rod (33) extending from a side (34) of said backrest (13) and being essentially parallel to said backrest (13).

4. An assembly according to claim 2 and 3, **characterized in that** said hinging means comprise a pair of hinges (31) reciprocally spaced along said supporting rod (33).

5. A commercial vehicle (1) comprising
- a driver's position;
- a seat (5) for a passenger arranged alongside said driver's position and comprising a backrest (13) movable between an essentially vertical raised position, in which it defines a support for said passenger, and an essentially horizontal folded position, in which a rear surface (15) of said backrest (13) is facing upwards;
- a barrier (20) which frontally delimits a rear loading compartment (3) and comprises a barrier portion (24) carried by said backrest (13) and jointly movable with said backrest (13) between said raised and folded positions;
**characterized in that** said barrier portion (24) is raisable with respect to said backrest (13) when the backrest (13) is in folded position to be taken to a protection position that is essentially vertical and is essentially parallel to a longitudinal direction (8) of advancement of the vehicle alongside said driver's position.

6. A vehicle according to claim 5, **characterized in that** said barrier (20) comprises a fixed portion (21) arranged behind said driver's position; said fixed portion (21) and said barrier portion (24) being reciprocally uncoupled.

7. A vehicle according to claim 6, **characterized in that** said fixed portion (21) is coupled in fixed position to an upper crossmember and to a lower crossmember constituting part of a chassis of said vehicle (1).

8. A vehicle according to claim 6 or 7, **characterized in that** said fixed portion (21) defines a frontal housing (23).

## Patentansprüche

1. Sitztrennwand-Baugruppe, insbesondere für ein Nutzfahrzeug (1), die Folgendes umfasst:
- einen Sitz (5), der eine Rückenlehne (13) umfasst, die bewegt werden kann zwischen einer im Wesentlichen vertikalen hochgestellten Stellung, in der die Rückenlehne (13) eine Lehne für einen Fahrgast definiert, und einer im Wesentlichen horizontalen umgeklappten Stellung, in der eine hintere Fläche (15) der Rückenlehne (13) nach oben zeigt,
- einen Absperrungsabschnitt (24), der durch die Rückenlehne (13) getragen wird und gemeinsam mit der Rückenlehne (13) zwischen der hochgestellten und der umgeklappten Stellung bewegt werden kann,
**dadurch gekennzeichnet, dass** der Absperrungsabschnitt (24) in Bezug auf die Rückenlehne (13) hochgestellt werden kann, wenn sich die Rückenlehne (13) in der umgeklappten Stellung befindet, um zu einer Schutzstellung gebracht zu werden, die im Wesentlichen vertikal ist und im Wesentlichen parallel zu der Rückenlehne (13) ist.

2. Baugruppe nach Anspruch 1, **dadurch gekennzeichnet, dass** sie Scharniermittel (31) umfasst, die den Absperrungsabschnitt (24) an die Rückenlehne (13) koppeln und den Absperrungsabschnitt (24) um eine Achse (30) zu und aus der Schutzstellung drehbar machen.

3. Baugruppe nach Anspruch 1 oder 2, **dadurch gekennzeichnet, dass** sie eine Haltestange (33) umfasst, an die der Absperrungsabschnitt (24) gekoppelt ist, wobei sich die Haltestange (33) von einer Seite der Rückenlehne (13) aus erstreckt und im Wesentlichen parallel zu der Rückenlehne (13) ist.

4. Baugruppe nach Anspruch 2 und 3, **dadurch gekennzeichnet, dass** die Scharniermittel ein Paar von Scharnieren (31) umfassen, die wechselseitig mit Zwischenraum längs der Haltestange (33) angeordnet sind.

5. Nutzfahrzeug (1), das Folgendes umfasst:
- eine Fahrerposition,
- einen Sitz (5) für einen Fahrgast, der neben der Fahrerposition angeordnet ist und eine Rückenlehne (13) umfasst, die bewegt werden kann zwischen einer im Wesentlichen vertikalen hochgestellten Stellung, in der sie eine Stütze für den Fahrgast definiert, und einer im Wesentlichen horizontalen umgeklappten Stellung, in der eine hintere Fläche (15) der Rückenlehne (13) nach oben zeigt,
- eine Absperrung (20), die einen hinteren Laderaum (3) frontal begrenzt und einen Absperrungsabschnitt (24) umfasst, der durch die Rückenlehne (13) getragen wird und gemeinsam mit der Rückenlehne (13) zwischen der hochgestellten und der umgeklappten Stellung bewegt werden kann,
**dadurch gekennzeichnet, dass** der Absperrungsabschnitt (24) in Bezug auf die Rückenlehne (13) hochgestellt werden kann, wenn sich die Rückenlehne (13) in der umgeklappten Stellung befindet, um neben der Fahrerposition zu einer Schutzstellung gebracht zu werden, die im Wesentlichen vertikal ist und im Wesentlichen parallel zu einer Längsrichtung (8) der Fortbewegung des Fahrzeugs ist.

6. Fahrzeug nach Anspruch 5, **dadurch gekennzeichnet, dass** die Absperrung (20) einen feststehenden Abschnitt (21) umfasst, der hinter der Fahrerposition angeordnet ist, wobei der feststehende Abschnitt (21) und der Absperrungsabschnitt (24) wechselseitig nicht gekoppelt sind.

7. Fahrzeug nach Anspruch 6, **dadurch gekennzeichnet, dass** der feststehende Abschnitt (21) in einer feststehenden Stellung an einen oberen Querträger und an einen unteren Querträger gekoppelt ist, die einen Teil eines Fahrgestells des Fahrzeugs (1) darstellen.

8. Fahrzeug nach Anspruch 6 oder 7, **dadurch gekennzeichnet, dass** der feststehende Abschnitt (21) ein frontales Gerüst (23) definiert.

## Revendications

1. Ensemble de siège-cloison, en particulier pour un véhicule utilitaire (1), comprenant :
- un siège (5) comprenant un dossier (13) mobile entre une position levée sensiblement verticale, dans laquelle le dossier (13) définit un appui pour un passager, et une position pliée sensiblement horizontale, dans laquelle une surface arrière (15) dudit dossier (13) est dirigée vers le haut ;
- une partie de barrière (24) supportée par ledit dossier (13) et conjointement mobile avec ledit dossier (13) entre lesdites positions levée et pliée ;
**caractérisé en ce que** ladite partie de barrière (24) peut être levée par rapport audit dossier (13) lorsque le dossier (13) est dans ladite position pliée pour être amenée à une position de protection, qui est sensiblement verticale et est sensiblement parallèle audit dossier (13).

2. Ensemble selon la revendication 1, **caractérisé en ce qu'**il comprend des moyens d'articulation (31) qui couplent ladite partie de barrière (24) audit dossier (13) et rendent ladite partie de barrière (24) rotative selon un axe (30) jusqu'à ladite position de protection et à partir de celle-ci.

3. Ensemble selon la revendication 1 ou 2, **caractérisé en ce qu'**il comprend une tige de support (33), à laquelle ladite partie de barrière (24) est couplée ; ladite tige de support (33) s'étendant depuis un côté (34) dudit dossier (13) et étant sensiblement parallèle audit dossier (13).

4. Ensemble selon les revendications 2 et 3, **caractérisé en ce que** lesdits moyens d'articulation comprennent une paire de charnières (31) réciproquement espacées le long de ladite tige de support (33).

5. Véhicule utilitaire (1) comprenant
- un poste de conducteur ;
- un siège (5) pour un passager agencé à côté dudit poste de conducteur et comprenant un dossier (13) mobile entre une position levée sensiblement verticale, dans laquelle il définit un support pour ledit passager, et une position pliée sensiblement horizontale, dans laquelle une surface arrière (15) dudit dossier (13) est dirigée vers le haut ;
- une barrière (20) qui délimite frontalement un compartiment de chargement arrière (3) et comprend une partie de barrière (24) supportée par ledit dossier (13) et conjointement mobile avec ledit dossier (13) entre lesdites positions levée et pliée ;
**caractérisé en ce que** ladite partie de barrière (24) peut être levée par rapport audit dossier (13) lorsque le dossier (13) est dans la position pliée pour être amenée à une position de protection qui est sensiblement verticale et est sensiblement parallèle à une direction longitudinale (8) de déplacement du véhicule à côté dudit poste de conducteur.

6. Véhicule selon la revendication 5, **caractérisé en ce que** ladite barrière (20) comprend une partie fixe (21) agencée derrière ledit poste de conducteur ; ladite partie fixe (21) et ladite partie de barrière (24) étant réciproquement découplées.

7. Véhicule selon la revendication 6, **caractérisé en ce que** ladite partie fixe (21) est couplée en position fixe à une traverse supérieure et à une traverse inférieure constituant une partie d'un châssis dudit véhicule (1).

8. Véhicule selon la revendication 6 ou 7, **caractérisé en ce que** ladite partie fixe (21) définit un logement frontal (23).
